# EUROPEAN PATENT SPECIFICATION

(11) **EP 3 586 453 B1**
(45) Date of publication and mention of the grant of the patent: **18.08.2021**
(21) Application number: 18708836.4
(22) Date of filing: 21.02.2018
(51) Int. Cl.: H04B 7/06, H04B 7/08, H04L 5/00, H04W 16/28, H04W 72/04

(54) **BEAM SWEEPING FOR CONTROL AND DATA TRANSMISSIONS**
STRAHLABTASTUNG FÜR STEUER- UND DATENÜBERTRAGUNGEN
BALAYAGE DE FAISCEAU POUR TRANSMISSIONS DE COMMANDE ET DE DONNÉES

(30) Priority: 23.02.2017 US 201762462871 P; 20.02.2018 US 201815900472
(43) Date of publication of application: 01.01.2020
(73) Proprietor: Qualcomm Incorporated, San Diego, CA 92121-1714 (US)
(72) Inventor: AKKARAKARAN, Sony, San Diego, California 92121-1714 (US); LUO, Tao, San Diego, California 92121 (US); JOHN WILSON, Makesh Pravin, San Diego, California 92121-1714 (US); NAGARAJA, Sumeeth, San Diego, California 92121-1714 (US); CHAKRABORTY, Kaushik, San Diego, California 92121-1714 (US); NAM, Wooseok, San Diego, California 92121-1714 (US); CHEN, Shengbo, San Diego, California 92121-1714 (US); WANG, Xiao Feng, San Diego, California 92121-1714 (US)
(74) Representative: Dunlop, Hugh Christopher
(86) International application number: PCT/US2018/018980
(87) International publication number: WO 2018/156601

(56) References cited:
- US-A1- 2012 119 953
- QUALCOMM INCORPORATED: "Views on RS for control and tracking", 3GPP DRAFT; R1-1610153_VIEWS_ON_RS_FOR_CONTROL_AND_TRA CKING, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Lisbon, Portugal; 20161010 - 20161014 9 October 2016 (2016-10-09), XP051150176, Retrieved from the Internet: URL:http://www.3gpp.org/ftp/Meetings_3GPP_ SYNC/RAN1/Docs/ [retrieved on 2016-10-09]
- JOAN PALACIOS ET AL: "Tracking mm-Wave Channel Dynamics: Fast Beam Training Strategies under Mobility", ARXIV.ORG, CORNELL UNIVERSITY LIBRARY, 201 OLIN LIBRARY CORNELL UNIVERSITY ITHACA, NY 14853, 23 December 2016 (2016-12-23), XP080742663,
- XINWEI: "Considerations on Beam Management for NR", 3GPP DRAFT; R1-166583 CONSIDERATIONS ON BEAM MANAGEMENT FOR NR, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Gothenburg, Sweden; 20160822 - 20160826 21 August 2016 (2016-08-21), XP051140289, Retrieved from the Internet: URL:http://www.3gpp.org/ftp/Meetings_3GPP_ SYNC/RAN1/Docs/ [retrieved on 2016-08-21]

## Description

### Field

The present disclosure relates generally to communication systems, and more particularly, to methods and apparatus for beam sweeping for control and data transmissions.

### BACKGROUND

Wireless communication systems are widely deployed to provide various telecommunication services such as telephony, video, data, messaging, and broadcasts. Typical wireless communication systems may employ multiple-access technologies capable of supporting communication with multiple users by sharing available system resources (e.g., bandwidth, transmit power). Examples of such multiple-access technologies include Long Term Evolution (LTE) systems, code division multiple access (CDMA) systems, time division multiple access (TDMA) systems, frequency division multiple access (FDMA) systems, orthogonal frequency division multiple access (OFDMA) systems, single-carrier frequency division multiple access (SC-FDMA) systems, and time division synchronous code division multiple access (TD-SCDMA) systems.

In some examples, a wireless multiple-access communication system may include a number of base stations, each simultaneously supporting communication for multiple communication devices, otherwise known as user equipment (UEs). In LTE or LTE-A network, a set of one or more base stations may define an eNodeB (eNB). In other examples (e.g., in a next generation or 5G network), a wireless multiple access communication system may include a number of distributed units (DUs) (e.g., edge units (EUs), edge nodes (ENs), radio heads (RHs), smart radio heads (SRHs), transmission reception points (TRPs), etc.) in communication with a number of central units (CUs) (e.g., central nodes (CNs), access node controllers (ANCs), etc.), where a set of one or more distributed units, in communication with a central unit, may define an access node (e.g., a new radio base station (NR BS), a new radio node-B (NR NB), a network node, 5G NB, eNB, etc.). A base station or DU may communicate with a set of UEs on downlink channels (e.g., for transmissions from a base station or to a UE) and uplink channels (e.g., for transmissions from a UE to a base station or distributed unit).

These multiple access technologies have been adopted in various telecommunication standards to provide a common protocol that enables different wireless devices to communicate on a municipal, national, regional, and even global level. An example of an emerging telecommunication standard is new radio (NR), for example, 5G radio access. NR is a set of enhancements to the LTE mobile standard promulgated by Third Generation Partnership Project (3GPP). It is designed to better support mobile broadband Internet access by improving spectral efficiency, lowering costs, improving services, making use of new spectrum, and better integrating with other open standards using OFDMA with a cyclic prefix (CP) on the downlink (DL) and on the uplink (UL) as well as support beamforming, multiple-input multiple-output (MIMO) antenna technology, and carrier aggregation.

However, as the demand for mobile broadband access continues to increase, there exists a desire for further improvements in NR technology. Preferably, these improvements should be applicable to other multi-access technologies and the telecommunication standards that employ these technologies.

US2012/0119953 relates to performing wireless communication by changing at least one of amplitudes and phases of transmission signals or received signals. R1-1610153 relates to RS for control and tracking for NR. Palacios et al.: "Tracking mm-Wave Channel Dynamics: Fast Beam Training Strategies under Mobility" relates to smart beam training and tracking strategies for fast mm-wave link establishment and maintenance under node mobility. R1-166583 relates to beam tracking request configurations and beam tracking procedures.

### BRIEF SUMMARY

The methods, and devices of the disclosure are set out in the appended set of claims. After considering this discussion, and particularly after reading the section entitled "Detailed Description" one will understand how the features of this disclosure provide advantages that include improved communications between access points and stations in a wireless network.

Certain aspects provide a method for wireless communications by a first wireless communications device. The method includes determining a sequence of transmit beams for use in sending directional transmissions to a second wireless communications device and sweeping through the sequence of transmit beams for transmissions to the second wireless communications device between beamforming training procedures performed with the second wireless communications device, characterized by: the sweeping comprises selecting transmit beams, from the sequence, based on a counter, wherein separate counters are used for selecting the transmit beams for data and control transmissions.

Certain aspects provide a method for wireless communications by a first wireless communication device. The method includes determining a sequence of receive beams for use in receiving directional transmissions from a second wireless communications device and sweeping through the sequence of receive beams for transmissions from the second wireless communications device between beamforming training procedures performed with the second wireless communications device, characterized by: the sweeping comprises selecting receive beams, from the sequence, based on a counter, wherein separate counters are used for selecting receive beams for data and control transmissions.

Aspects generally include methods, apparatus, systems, computer readable mediums, and processing systems, as substantially described herein with reference to and as illustrated by the accompanying drawings.

To the accomplishment of the foregoing and related ends, the one or more aspects comprise the features hereinafter fully described and particularly pointed out in the claims. The following description and the annexed drawings set forth in detail certain illustrative features of the one or more aspects. These features are indicative, however, of but a few of the various ways in which the principles of various aspects may be employed.

### BRIEF DESCRIPTION OF THE DRAWINGS

So that the manner in which the above-recited features of the present disclosure can be understood in detail, a more particular description, briefly summarized above, may be had by reference to aspects, some of which are illustrated in the appended drawings. It is to be noted, however, that the appended drawings illustrate only certain typical aspects of this disclosure and are therefore not to be considered limiting of its scope, for the description may admit to other equally effective aspects.
FIG. 1 is a block diagram conceptually illustrating an example telecommunications system, in accordance with certain aspects of the present disclosure.
FIG. 2 is a block diagram illustrating an example logical architecture of a distributed RAN, in accordance with certain aspects of the present disclosure.
FIG. 3 is a diagram illustrating an example physical architecture of a distributed RAN, in accordance with certain aspects of the present disclosure.
FIG. 4 is a block diagram conceptually illustrating a design of an example BS and user equipment (UE), in accordance with certain aspects of the present disclosure.
FIG. 5 is a diagram showing examples for implementing a communication protocol stack, in accordance with certain aspects of the present disclosure.
FIG. 6 illustrates an example of a DL-centric subframe, in accordance with certain aspects of the present disclosure.
FIG. 7 illustrates an example of an UL-centric subframe, in accordance with certain aspects of the present disclosure.
FIG. 8 illustrates example beamforming training, in accordance with certain aspects of the present disclosure.
FIG. 9 illustrates example operations for a user equipment (UE) sending uplink transmissions while sweeping transmit beams, in accordance with certain aspects of the present disclosure.
FIG. 10 illustrates example operations for a base station configuring a UE to send uplink transmissions while sweeping transmit beams, in accordance with certain aspects of the present disclosure.
FIG. 11 illustrates example operations for a base station sending downlink transmissions while sweeping transmit beams, in accordance with certain aspects of the present disclosure.
FIG. 12 illustrates example operations for a UE communicating with a base station that is sending downlink transmissions while sweeping transmit beams, in accordance with certain aspects of the present disclosure.
FIG. 13 illustrates example operations for receiving downlink transmissions while sweeping receive beams, in accordance with certain aspects of the present disclosure.
FIG. 14 illustrates example operations for receiving uplink transmissions while sweeping receive beams, in accordance with certain aspects of the present disclosure.

To facilitate understanding, identical reference numerals have been used, where possible, to designate identical elements that are common to the figures. It is contemplated that elements disclosed in one aspect may be beneficially utilized on other aspects without specific recitation.

### DETAILED DESCRIPTION

Aspects of the present disclosure relate to methods and apparatus for beam sweeping for control and data transmissions.

Aspects of the present disclosure provide apparatus, methods, processing systems, and computer readable mediums for new radio (NR) (new radio access technology or 5G technology).

NR may support various wireless communication services, such as Enhanced mobile broadband (eMBB) targeting wide bandwidth (e.g. 80 MHz beyond), millimeter wave (mmW) targeting high carrier frequency (e.g. 60 GHz), massive MTC (mMTC) targeting non-backward compatible MTC techniques, and/or mission critical targeting ultra-reliable low latency communications (URLLC). These services may include latency and reliability requirements. These services may also have different transmission time intervals (TTI) to meet respective quality of service (QoS) requirements. In addition, these services may co-exist in the same subframe.

As discussed herein a pair of wireless communication devices (e.g., BS 110 and UE 120) may engage in beam forming (BF) training to achieve a high directional gain. After the successful after the successful completion of the BF training process, a communication link may be established using an optimized set of beams, through which data and control information are transmitted between a pair of wireless communication devices. However, due to various factors including mobility, etc., the beams described above may not remain optimal any more over time (i.e. may become sub-optimal) and performing BF re-training to track the beam variation may result in a higher overhead. Accordingly, the embodiments described herein relate to configuring one or both of the wireless communication devices to perform precoder or beam sweeping (i.e., cycling through different transmit and/or receive beams in between beamforming training procedures) in order to reduce the sub-optimality of the beams, which may help avoid or reduce the beam re-training overhead. In other words, in the embodiments described herein, between beamforming training procedures, a wireless communication device may make small variations to its precoder/beam over time to reduce the sub-optimality of the beam. For example, when the direction of an optimal beam varies slightly over time, the wireless communication device may, in some embodiments, vary its beam, resulting in capturing optimality during at least some periods of time.

The following description provides examples, and is not limiting of the scope, applicability, or examples set forth in the claims. Changes may be made in the function and arrangement of elements discussed without departing from the scope of the disclosure. Various examples may omit, substitute, or add various procedures or components as appropriate. For instance, the methods described may be performed in an order different from that described, and various steps may be added, omitted, or combined. Also, features described with respect to some examples may be combined in some other examples. For example, an apparatus may be implemented or a method may be practiced using any number of the aspects set forth herein. In addition, the scope of the disclosure is intended to cover such an apparatus or method which is practiced using other structure, functionality, or structure and functionality in addition to or other than the various aspects of the disclosure set forth herein. It should be understood that any aspect of the disclosure disclosed herein may be embodied by one or more elements of a claim. The word "exemplary" is used herein to mean "serving as an example, instance, or illustration." Any aspect described herein as "exemplary" is not necessarily to be construed as preferred or advantageous over other aspects.

The techniques described herein may be used for various wireless communication networks such as LTE, CDMA, TDMA, FDMA, OFDMA, SC-FDMA and other networks. The terms "network" and "system" are often used interchangeably. A CDMA network may implement a radio technology such as Universal Terrestrial Radio Access (UTRA), cdma2000, etc. UTRA includes Wideband CDMA (WCDMA) and other variants of CDMA. cdma2000 covers IS-2000, IS-95 and IS-856 standards. A TDMA network may implement a radio technology such as Global System for Mobile Communications (GSM). An OFDMA network may implement a radio technology such as NR (e.g. 5G RA), Evolved UTRA (E-UTRA), Ultra Mobile Broadband (UMB), IEEE 802.11 (Wi-Fi), IEEE 802.16 (WiMAX), IEEE 802.20, Flash-OFDMA, etc. UTRA and E-UTRA are part of Universal Mobile Telecommunication System (UMTS). NR is an emerging wireless communications technology under development in conjunction with the 5G Technology Forum (5GTF). 3GPP Long Term Evolution (LTE) and LTE-Advanced (LTE-A) are releases of UMTS that use E-UTRA. UTRA, E-UTRA, UMTS, LTE, LTE-A and GSM are described in documents from an organization named "3rd Generation Partnership Project" (3GPP). cdma2000 and UMB are described in documents from an organization named "3rd Generation Partnership Project 2" (3GPP2). The techniques described herein may be used for the wireless networks and radio technologies mentioned above as well as other wireless networks and radio technologies. For clarity, while aspects may be described herein using terminology commonly associated with 3G and/or 4G wireless technologies, aspects of the present disclosure can be applied in other generation-based communication systems, such as 5G and later, including NR technologies.

### EXAMPLE WIRELESS COMMUNICATIONS SYSTEM

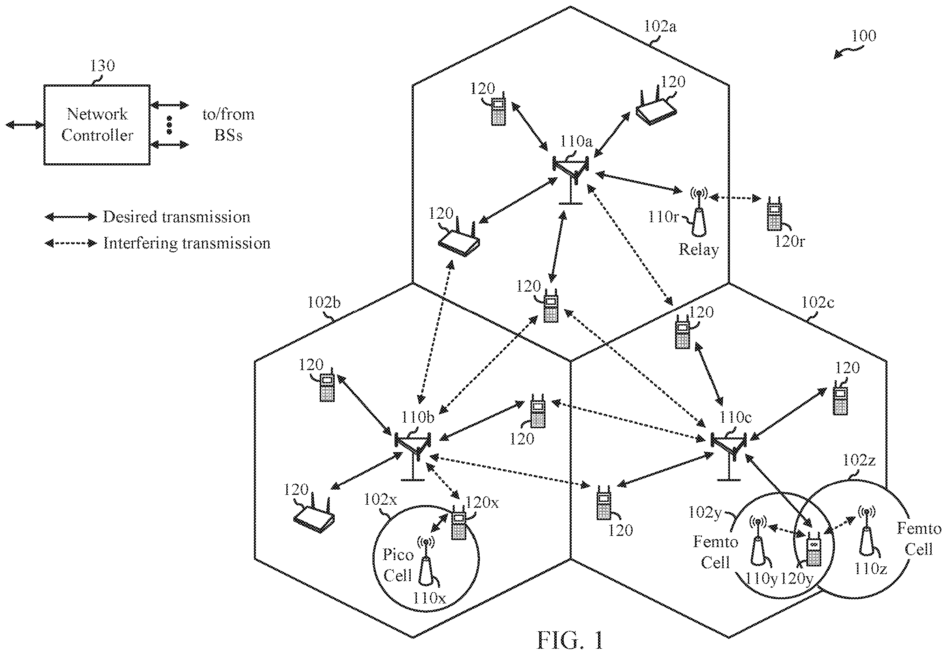

FIG. 1 illustrates an example wireless network 100, such as a new radio (NR) or 5G network, in which aspects of the present disclosure may be performed.

As illustrated in FIG. 1, the wireless network 100 may include a number of BSs 110 and other network entities. A BS may be a station that communicates with UEs. Each BS 110 may provide communication coverage for a particular geographic area. In 3GPP, the term "cell" can refer to a coverage area of a Node B and/or a Node B subsystem serving this coverage area, depending on the context in which the term is used. In NR systems, the term "cell" and eNB, Node B, 5G NB, AP, NR BS, NR BS, or TRP may be interchangeable. In some examples, a cell may not necessarily be stationary, and the geographic area of the cell may move according to the location of a mobile base station. In some examples, the base stations may be interconnected to one another and/or to one or more other base stations or network nodes (not shown) in the wireless network 100 through various types of backhaul interfaces such as a direct physical connection, a virtual network, or the like using any suitable transport network.

In general, any number of wireless networks may be deployed in a given geographic area. Each wireless network may support a particular radio access technology (RAT) and may operate on one or more frequencies. A RAT may also be referred to as a radio technology, an air interface, etc. A frequency may also be referred to as a carrier, a frequency channel, etc. Each frequency may support a single RAT in a given geographic area in order to avoid interference between wireless networks of different RATs. In some cases, NR or 5G RAT networks may be deployed.

A BS may provide communication coverage for a macro cell, a pico cell, a femto cell, and/or other types of cell. A macro cell may cover a relatively large geographic area (e.g., several kilometers in radius) and may allow unrestricted access by UEs with service subscription. A pico cell may cover a relatively small geographic area and may allow unrestricted access by UEs with service subscription. A femto cell may cover a relatively small geographic area (e.g., a home) and may allow restricted access by UEs having association with the femto cell (e.g., UEs in a Closed Subscriber Group (CSG), UEs for users in the home, etc.). A BS for a macro cell may be referred to as a macro BS. A BS for a pico cell may be referred to as a pico BS. A BS for a femto cell may be referred to as a femto BS or a home BS. In the example shown in FIG. 1, the BSs 110a, 110b and 110c may be macro BSs for the macro cells 102a, 102b and 102c, respectively. The BS 110x may be a pico BS for a pico cell 102x. The BSs 110y and 110z may be femto BS for the femto cells 102y and 102z, respectively. A BS may support one or multiple (e.g., three) cells.

The wireless network 100 may also include relay stations. A relay station is a station that receives a transmission of data and/or other information from an upstream station (e.g., a BS or a UE) and sends a transmission of the data and/or other information to a downstream station (e.g., a UE or a BS). A relay station may also be a UE that relays transmissions for other UEs. In the example shown in FIG. 1, a relay station 110r may communicate with the BS 110a and a UE 120r in order to facilitate communication between the BS 110a and the UE 120r. A relay station may also be referred to as a relay BS, a relay, etc.

The wireless network 100 may be a heterogeneous network that includes BSs of different types, e.g., macro BS, pico BS, femto BS, relays, etc. These different types of BSs may have different transmit power levels, different coverage areas, and different impact on interference in the wireless network 100. For example, macro BS may have a high transmit power level (e.g., 20 Watts) whereas pico BS, femto BS, and relays may have a lower transmit power level (e.g., 1 Watt).

The wireless network 100 may support synchronous or asynchronous operation. For synchronous operation, the BSs may have similar frame timing, and transmissions from different BSs may be approximately aligned in time. For asynchronous operation, the BSs may have different frame timing, and transmissions from different BSs may not be aligned in time. The techniques described herein may be used for both synchronous and asynchronous operation.

A network controller 130 may be coupled to a set of BSs and provide coordination and control for these BSs. The network controller 130 may communicate with the BSs 110 via a backhaul. The BSs 110 may also communicate with one another, e.g., directly or indirectly via wireless or wireline backhaul.

The UEs 120 (e.g., 120x, 120y, etc.) may be dispersed throughout the wireless network 100, and each UE may be stationary or mobile. A UE may also be referred to as a mobile station, a terminal, an access terminal, a subscriber unit, a station, a Customer Premises Equipment (CPE), a cellular phone, a smart phone, a personal digital assistant (PDA), a wireless modem, a wireless communication device, a handheld device, a laptop computer, a cordless phone, a wireless local loop (WLL) station, a tablet, a camera, a gaming device, a netbook, a smartbook, an ultrabook, a medical device or medical equipment, a biometric sensor/device, a wearable device such as a smart watch, smart clothing, smart glasses, a smart wrist band, smart jewelry (e.g., a smart ring, a smart bracelet, etc.), an entertainment device (e.g., a music device, a video device, a satellite radio, etc.), a vehicular component or sensor, a smart meter/sensor, industrial manufacturing equipment, a global positioning system device, or any other suitable device that is configured to communicate via a wireless or wired medium. Some UEs may be considered evolved or machine-type communication (MTC) devices or evolved MTC (eMTC) devices. MTC and eMTC UEs include, for example, robots, drones, remote devices, sensors, meters, monitors, location tags, etc., that may communicate with a BS, another device (e.g., remote device), or some other entity. A wireless node may provide, for example, connectivity for or to a network (e.g., a wide area network such as Internet or a cellular network) via a wired or wireless communication link. Some UEs may be considered Internet-of-Things (IoT) devices. In FIG. 1, a solid line with double arrows indicates desired transmissions between a UE and a serving BS, which is a BS designated to serve the UE on the downlink and/or uplink. A dashed line with double arrows indicates interfering transmissions between a UE and a BS.

Certain wireless networks (e.g., LTE) utilize orthogonal frequency division multiplexing (OFDM) on the downlink and single-carrier frequency division multiplexing (SC-FDM) on the uplink. OFDM and SC-FDM partition the system bandwidth into multiple (K) orthogonal subcarriers, which are also commonly referred to as tones, bins, etc. Each subcarrier may be modulated with data. In general, modulation symbols are sent in the frequency domain with OFDM and in the time domain with SC-FDM. The spacing between adjacent subcarriers may be fixed, and the total number of subcarriers (K) may be dependent on the system bandwidth. For example, the spacing of the subcarriers may be 15 kHz and the minimum resource allocation (called a 'resource block') may be 12 subcarriers (or 180 kHz). Consequently, the nominal FFT size may be equal to 128, 256, 512, 1024 or 2048 for system bandwidth of 1.25, 2.5, 5, 10 or 20 megahertz (MHz), respectively. The system bandwidth may also be partitioned into subbands. For example, a subband may cover 1.08 MHz (i.e., 6 resource blocks), and there may be 1, 2, 4, 8 or 16 subbands for system bandwidth of 1.25, 2.5, 5, 10 or 20 MHz, respectively.

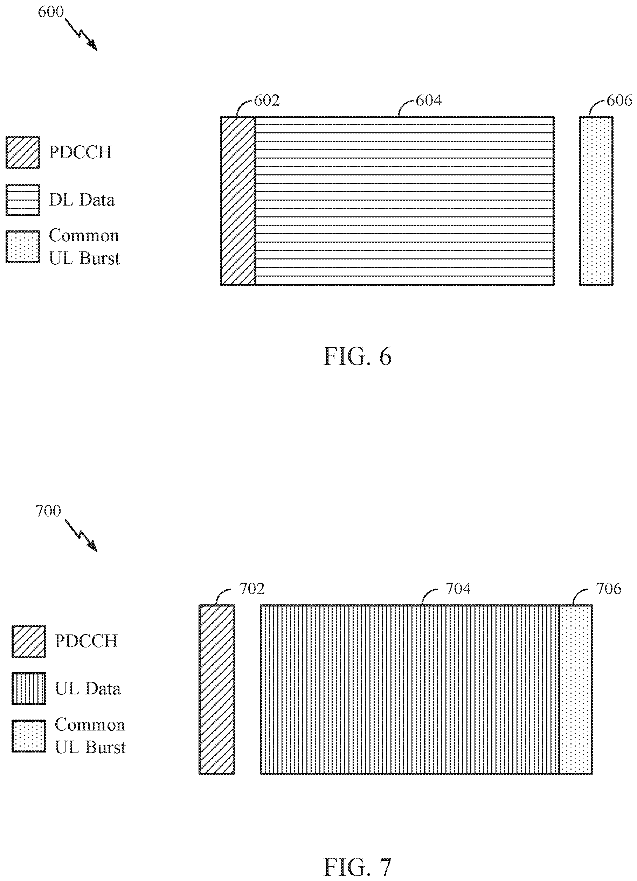

While aspects of the examples described herein may be associated with LTE technologies, aspects of the present disclosure may be applicable with other wireless communications systems, such as NR. NR may utilize OFDM with a CP on the uplink and downlink and include support for half-duplex operation using time division duplex (TDD). A single component carrier bandwidth of 100 MHz may be supported. NR resource blocks may span 12 sub-carriers with a sub-carrier bandwidth of 75 kHz over a 0.1 ms duration. Each radio frame may consist of 50 subframes with a length of 10 ms. Consequently, each subframe may have a length of 0.2 ms. Each subframe may indicate a link direction (i.e., DL or UL) for data transmission and the link direction for each subframe may be dynamically switched. Each subframe may include DL/UL data as well as DL/UL control data. UL and DL subframes for NR may be as described in more detail below with respect to FIGs. 6 and 7. Beamforming may be supported and beam direction may be dynamically configured. MIMO transmissions with precoding may also be supported. MIMO configurations in the DL may support up to 8 transmit antennas with multi-layer DL transmissions up to 8 streams and up to 2 streams per UE. Multi-layer transmissions with up to 2 streams per UE may be supported. Aggregation of multiple cells may be supported with up to 8 serving cells. Alternatively, NR may support a different air interface, other than an OFDM-based. NR networks may include entities such CUs and/or DUs.

In some examples, access to the air interface may be scheduled, wherein a scheduling entity (e.g., a base station) allocates resources for communication among some or all devices and equipment within its service area or cell. Within the present disclosure, as discussed further below, the scheduling entity may be responsible for scheduling, assigning, reconfiguring, and releasing resources for one or more subordinate entities. That is, for scheduled communication, subordinate entities utilize resources allocated by the scheduling entity. Base stations are not the only entities that may function as a scheduling entity. That is, in some examples, a UE may function as a scheduling entity, scheduling resources for one or more subordinate entities (e.g., one or more other UEs). In this example, the UE is functioning as a scheduling entity, and other UEs utilize resources scheduled by the UE for wireless communication. A UE may function as a scheduling entity in a peer-to-peer (P2P) network, and/or in a mesh network. In a mesh network example, UEs may optionally communicate directly with one another in addition to communicating with the scheduling entity.

Thus, in a wireless communication network with a scheduled access to time-frequency resources and having a cellular configuration, a P2P configuration, and a mesh configuration, a scheduling entity and one or more subordinate entities may communicate utilizing the scheduled resources.

As noted above, a RAN may include a CU and DUs. A NR BS (e.g., eNB, 5G Node B, Node B, transmission reception point (TRP), access point (AP)) may correspond to one or multiple BSs. NR cells can be configured as access cell (ACells) or data only cells (DCells). For example, the RAN (e.g., a central unit or distributed unit) can configure the cells. DCells may be cells used for carrier aggregation or dual connectivity, but not used for initial access, cell selection/reselection, or handover. In some cases DCells may not transmit synchronization signals-in some case cases DCells may transmit SS. NR BSs may transmit downlink signals to UEs indicating the cell type. Based on the cell type indication, the UE may communicate with the NR BS. For example, the UE may determine NR BSs to consider for cell selection, access, handover, and/or measurement based on the indicated cell type.

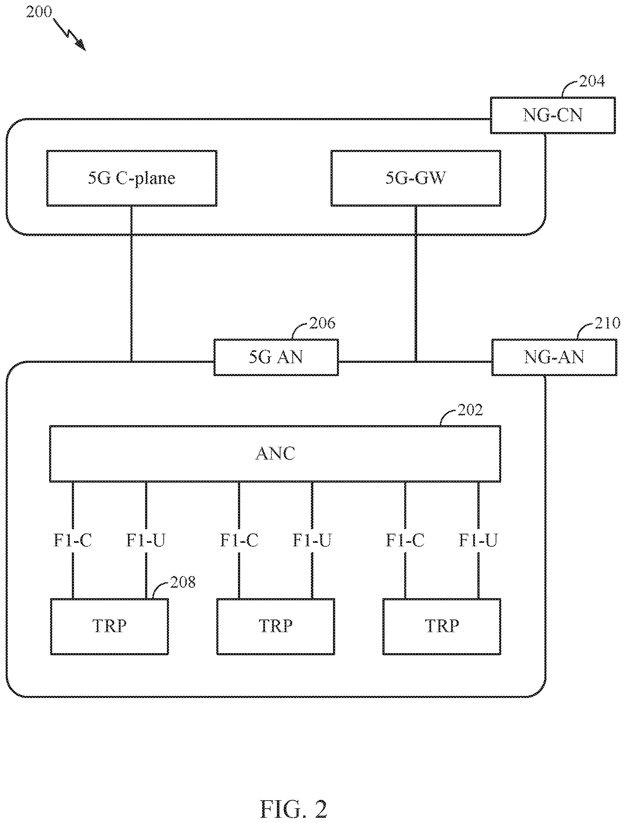

FIG. 2 illustrates an example logical architecture of a distributed radio access network (RAN) 200, which may be implemented in the wireless communication system illustrated in FIG. 1. A 5G access node 206 may include an access node controller (ANC) 202. The ANC may be a central unit (CU) of the distributed RAN 200. The backhaul interface to the next generation core network (NG-CN) 204 may terminate at the ANC. The backhaul interface to neighboring next generation access nodes (NG-ANs) may terminate at the ANC. The ANC may include one or more TRPs 208 (which may also be referred to as BSs, NR BSs, Node Bs, 5G NBs, APs, or some other term). As described above, a TRP may be used interchangeably with "cell."

The TRPs 208 may be a DU. The TRPs may be connected to one ANC (ANC 202) or more than one ANC (not illustrated). For example, for RAN sharing, radio as a service (RaaS), and service specific AND deployments, the TRP may be connected to more than one ANC. A TRP may include one or more antenna ports. The TRPs may be configured to individually (e.g., dynamic selection) or jointly (e.g., joint transmission) serve traffic to a UE.

The local architecture 200 may be used to illustrate fronthaul definition. The architecture may be defined that support fronthauling solutions across different deployment types. For example, the architecture may be based on transmit network capabilities (e.g., bandwidth, latency, and/or jitter).

The architecture may share features and/or components with LTE. According to aspects, the next generation AN (NG-AN) 210 may support dual connectivity with NR. The NG-AN may share a common fronthaul for LTE and NR.

The architecture may enable cooperation between and among TRPs 208. For example, cooperation may be preset within a TRP and/or across TRPs via the ANC 202. According to aspects, no inter-TRP interface may be needed/present.

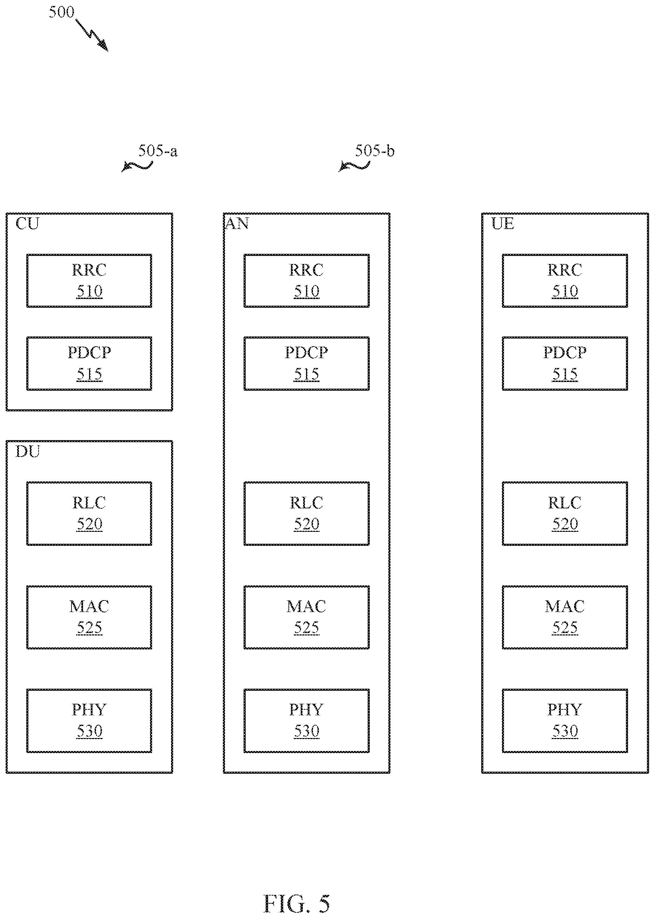

According to aspects, a dynamic configuration of split logical functions may be present within the architecture 200. As will be described in more detail with reference to FIG. 5, the Radio Resource Control (RRC) layer, Packet Data Convergence Protocol (PDCP) layer, Radio Link Control (RLC) layer, Medium Access Control (MAC) layer, and a Physical (PHY) layers may be adaptably placed at the DU or CU (e.g., TRP or ANC, respectively). According to certain aspects, a BS may include a central unit (CU) (e.g., ANC 202) and/or one or more distributed units (e.g., one or more TRPs 208).

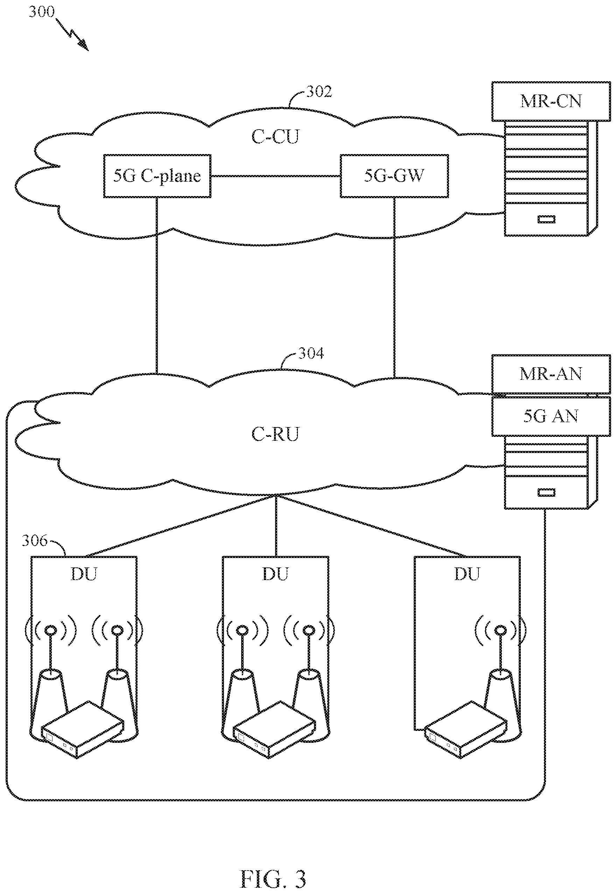

FIG. 3 illustrates an example physical architecture of a distributed RAN 300, according to aspects of the present disclosure. A centralized core network unit (C-CU) 302 may host core network functions. The C-CU may be centrally deployed. C-CU functionality may be offloaded (e.g., to advanced wireless services (AWS)), in an effort to handle peak capacity.

A centralized RAN unit (C-RU) 304 may host one or more ANC functions. Optionally, the C-RU may host core network functions locally. The C-RU may have distributed deployment. The C-RU may be closer to the network edge.

A DU 306 may host one or more TRPs (edge node (EN), an edge unit (EU), a radio head (RH), a smart radio head (SRH), or the like). The DU may be located at edges of the network with radio frequency (RF) functionality.

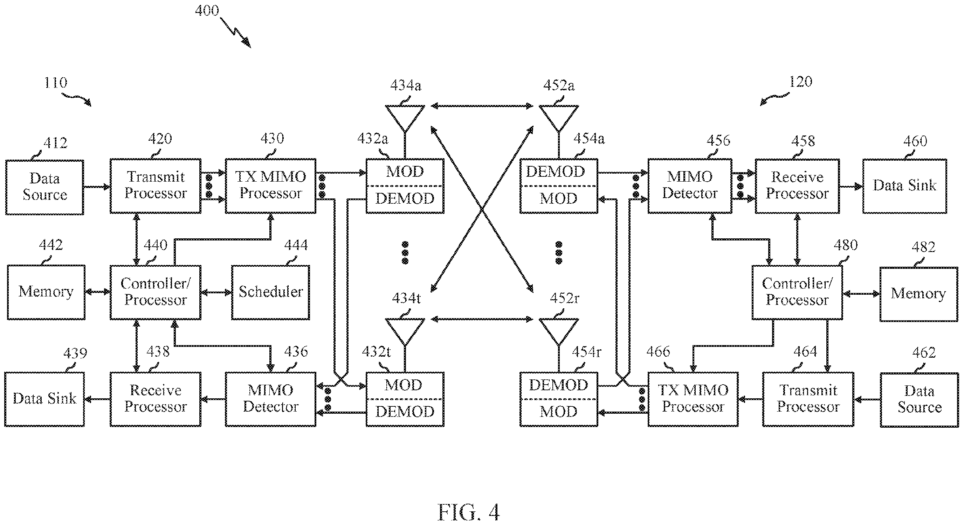

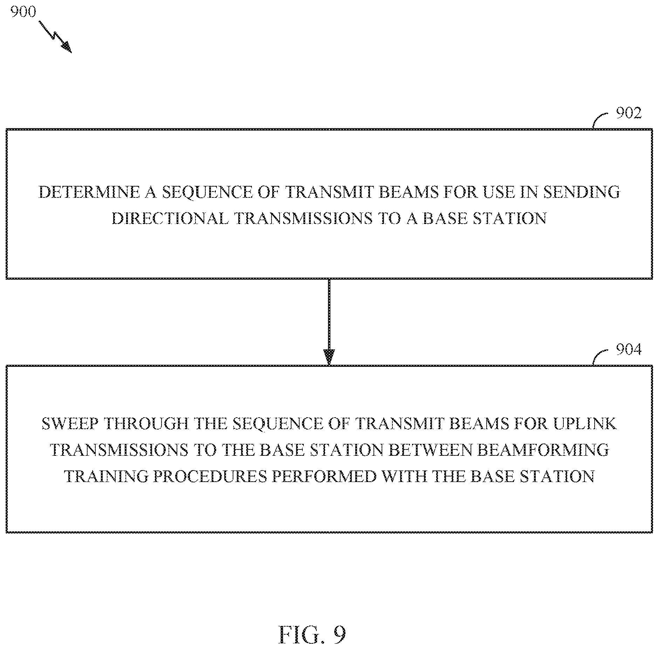

FIG. 4 illustrates example components of the BS 110 and UE 120 illustrated in FIG. 1, which may be used to implement aspects of the present disclosure. As described above, the BS may include a TRP. One or more components of the BS 110 and UE 120 may be used to practice aspects of the present disclosure. For example, antennas 452, Tx/Rx 222, processors 466, 458, 464, and/or controller/processor 480 of the UE 120 and/or antennas 434, processors 460, 420, 438, and/or controller/processor 440 of the BS 110 may be used to perform the operations described herein and illustrated with reference to FIGs. 9-14.

FIG. 4 shows a block diagram of a design of a BS 110 and a UE 120, which may be one of the BSs and one of the UEs in FIG. 1. For a restricted association scenario, the base station 110 may be the macro BS 110c in FIG. 1, and the UE 120 may be the UE 120y. The base station 110 may also be a base station of some other type. The base station 110 may be equipped with antennas 434a through 434t, and the UE 120 may be equipped with antennas 452a through 452r.

At the base station 110, a transmit processor 420 may receive data from a data source 412 and control information from a controller/processor 440. The control information may be for the Physical Broadcast Channel (PBCH), Physical Control Format Indicator Channel (PCFICH), Physical Hybrid ARQ Indicator Channel (PHICH), Physical Downlink Control Channel (PDCCH), etc. The data may be for the Physical Downlink Shared Channel (PDSCH), etc. The processor 420 may process (e.g., encode and symbol map) the data and control information to obtain data symbols and control symbols, respectively. The processor 420 may also generate reference symbols, e.g., for the PSS, SSS, and cell-specific reference signal. A transmit (TX) multiple-input multiple-output (MIMO) processor 430 may perform spatial processing (e.g., precoding) on the data symbols, the control symbols, and/or the reference symbols, if applicable, and may provide output symbol streams to the modulators (MODs) 432a through 432t. For example, the TX MIMO processor 430 may perform certain aspects described herein for RS multiplexing. Each modulator 432 may process a respective output symbol stream (e.g., for OFDM, etc.) to obtain an output sample stream. Each modulator 432 may further process (e.g., convert to analog, amplify, filter, and upconvert) the output sample stream to obtain a downlink signal. Downlink signals from modulators 432a through 432t may be transmitted via the antennas 434a through 434t, respectively.

At the UE 120, the antennas 452a through 452r may receive the downlink signals from the base station 110 and may provide received signals to the demodulators (DEMODs) 454a through 454r, respectively. Each demodulator 454 may condition (e.g., filter, amplify, downconvert, and digitize) a respective received signal to obtain input samples. Each demodulator 454 may further process the input samples (e.g., for OFDM, etc.) to obtain received symbols. A MIMO detector 456 may obtain received symbols from all the demodulators 454a through 454r, perform MIMO detection on the received symbols if applicable, and provide detected symbols. For example, MIMO detector 456 may provide detected RS transmitted using techniques described herein. A receive processor 458 may process (e.g., demodulate, deinterleave, and decode) the detected symbols, provide decoded data for the UE 120 to a data sink 460, and provide decoded control information to a controller/processor 480. According to one or more cases, CoMP aspects can include providing the antennas, as well as some Tx/Rx functionalities, such that they reside in distributed units. For example, some Tx/Rx processings can be done in the central unit, while other processing can be done at the distributed units. For example, in accordance with one or more aspects as shown in the diagram, the BS mod/demod 432 may be in the distributed units.

On the uplink, at the UE 120, a transmit processor 464 may receive and process data (e.g., for the Physical Uplink Shared Channel (PUSCH)) from a data source 462 and control information (e.g., for the Physical Uplink Control Channel (PUCCH) from the controller/processor 480. The transmit processor 464 may also generate reference symbols for a reference signal. The symbols from the transmit processor 464 may be precoded by a TX MIMO processor 466 if applicable, further processed by the demodulators 454a through 454r (e.g., for SC-FDM, etc.), and transmitted to the base station 110. At the BS 110, the uplink signals from the UE 120 may be received by the antennas 434, processed by the modulators 432, detected by a MIMO detector 436 if applicable, and further processed by a receive processor 438 to obtain decoded data and control information sent by the UE 120. The receive processor 438 may provide the decoded data to a data sink 439 and the decoded control information to the controller/processor 440.

The controllers/processors 440 and 480 may direct the operation at the base station 110 and the UE 120, respectively. The processor 440 and/or other processors and modules at the base station 110 may perform or direct, e.g., the execution of the functional blocks illustrated in FIGs. 9-14, and/or other processes for the techniques described herein. The processor 480 and/or other processors and modules at the UE 120 may also perform or direct processes for the techniques described herein. The memories 442 and 482 may store data and program codes for the BS 110 and the UE 120, respectively. A scheduler 444 may schedule UEs for data transmission on the downlink and/or uplink.

FIG. 5 illustrates a diagram 500 showing examples for implementing a communications protocol stack, according to aspects of the present disclosure. The illustrated communications protocol stacks may be implemented by devices operating in a in a 5G system (e.g., a system that supports uplink-based mobility). Diagram 500 illustrates a communications protocol stack including a Radio Resource Control (RRC) layer 510, a Packet Data Convergence Protocol (PDCP) layer 515, a Radio Link Control (RLC) layer 520, a Medium Access Control (MAC) layer 525, and a Physical (PHY) layer 530. In various examples the layers of a protocol stack may be implemented as separate modules of software, portions of a processor or ASIC, portions of non-collocated devices connected by a communications link, or various combinations thereof. Collocated and non-collocated implementations may be used, for example, in a protocol stack for a network access device (e.g., ANs, CUs, and/or DUs) or a UE.

A first option 505-a shows a split implementation of a protocol stack, in which implementation of the protocol stack is split between a centralized network access device (e.g., an ANC 202 in FIG. 2) and distributed network access device (e.g., DU 208 in FIG. 2). In the first option 505-a, an RRC layer 510 and a PDCP layer 515 may be implemented by the central unit, and an RLC layer 520, a MAC layer 525, and a PHY layer 530 may be implemented by the DU. In various examples the CU and the DU may be collocated or non-collocated. The first option 505-a may be useful in a macro cell, micro cell, or pico cell deployment.

A second option 505-b shows a unified implementation of a protocol stack, in which the protocol stack is implemented in a single network access device (e.g., access node (AN), new radio base station (NR BS), a new radio Node-B (NR NB), a network node (NN), or the like.). In the second option, the RRC layer 510, the PDCP layer 515, the RLC layer 520, the MAC layer 525, and the PHY layer 530 may each be implemented by the AN. The second option 505-b may be useful in a femto cell deployment.

Regardless of whether a network access device implements part or all of a protocol stack, a UE may implement an entire protocol stack (e.g., the RRC layer 510, the PDCP layer 515, the RLC layer 520, the MAC layer 525, and the PHY layer 530).

FIG. 6 is a diagram 600 showing an example of a DL-centric subframe. The DL-centric subframe may include a control portion 602. The control portion 602 may exist in the initial or beginning portion of the DL-centric subframe. The control portion 602 may include various scheduling information and/or control information corresponding to various portions of the DL-centric subframe. In some configurations, the control portion 602 may be a physical DL control channel (PDCCH), as indicated in FIG. 6. The DL-centric subframe may also include a DL data portion 604. The DL data portion 604 may sometimes be referred to as the payload of the DL-centric subframe. The DL data portion 604 may include the communication resources utilized to communicate DL data from the scheduling entity (e.g., UE or BS) to the subordinate entity (e.g., UE). In some configurations, the DL data portion 604 may be a physical DL shared channel (PDSCH).

The DL-centric subframe may also include a common UL portion 606. The common UL portion 606 may sometimes be referred to as an UL burst, a common UL burst, and/or various other suitable terms. The common UL portion 606 may include feedback information corresponding to various other portions of the DL-centric subframe. For example, the common UL portion 606 may include feedback information corresponding to the control portion 602. Non-limiting examples of feedback information may include an ACK signal, a NACK signal, a HARQ indicator, and/or various other suitable types of information. The common UL portion 606 may include additional or alternative information, such as information pertaining to random access channel (RACH) procedures, scheduling requests (SRs), and various other suitable types of information. As illustrated in FIG. 6, the end of the DL data portion 604 may be separated in time from the beginning of the common UL portion 606. This time separation may sometimes be referred to as a gap, a guard period, a guard interval, and/or various other suitable terms. This separation provides time for the switch-over from DL communication (e.g., reception operation by the subordinate entity (e.g., UE)) to UL communication (e.g., transmission by the subordinate entity (e.g., UE)). One of ordinary skill in the art will understand that the foregoing is merely one example of a DL-centric subframe and alternative structures having similar features may exist without necessarily deviating from the aspects described herein.

FIG. 7 is a diagram 700 showing an example of an UL-centric subframe. The UL -centric subframe may include a control portion 702. The control portion 702 may exist in the initial or beginning portion of the UL-centric subframe. The control portion 702 in FIG. 7 may be similar to the control portion described above with reference to FIG. 6. The UL-centric subframe may also include an UL data portion 704. The UL data portion 704 may sometimes be referred to as the payload of the UL-centric subframe. The UL data portion may refer to the communication resources utilized to communicate UL data from the subordinate entity (e.g., UE) to the scheduling entity (e.g., UE or BS). In some configurations, the control portion 702 may be a physical DL control channel (PDCCH).

As illustrated in FIG. 7, the end of the control portion 702 may be separated in time from the beginning of the UL data portion 704. This time separation may sometimes be referred to as a gap, guard period, guard interval, and/or various other suitable terms. This separation provides time for the switch-over from DL communication (e.g., reception operation by the scheduling entity) to UL communication (e.g., transmission by the scheduling entity). The UL-centric subframe may also include a common UL portion 706. The common UL portion 706 in FIG. 7 may be similar to the common UL portion 706 described above with reference to FIG. 7. The common UL portion 706 may additionally or alternatively include information pertaining to channel quality indicator (CQI), sounding reference signals (SRSs), and various other suitable types of information. One of ordinary skill in the art will understand that the foregoing is merely one example of an UL-centric subframe and alternative structures having similar features may exist without necessarily deviating from the aspects described herein.

In some circumstances, two or more subordinate entities (e.g., UEs) may communicate with each other using sidelink signals. Real-world applications of such sidelink communications may include public safety, proximity services, UE-to-network relaying, vehicle-to-vehicle (V2V) communications, Internet of Everything (IoE) communications, IoT communications, mission-critical mesh, and/or various other suitable applications. Generally, a sidelink signal may refer to a signal communicated from one subordinate entity (e.g., UE1) to another subordinate entity (e.g., UE2) without relaying that communication through the scheduling entity (e.g., UE or BS), even though the scheduling entity may be utilized for scheduling and/or control purposes. In some examples, the sidelink signals may be communicated using a licensed spectrum (unlike wireless local area networks, which typically use an unlicensed spectrum).

A UE may operate in various radio resource configurations, including a configuration associated with transmitting pilots using a dedicated set of resources (e.g., a radio resource control (RRC) dedicated state, etc.) or a configuration associated with transmitting pilots using a common set of resources (e.g., an RRC common state, etc.). When operating in the RRC dedicated state, the UE may select a dedicated set of resources for transmitting a pilot signal to a network. When operating in the RRC common state, the UE may select a common set of resources for transmitting a pilot signal to the network. In either case, a pilot signal transmitted by the UE may be received by one or more network access devices, such as an AN, or a DU, or portions thereof. Each receiving network access device may be configured to receive and measure pilot signals transmitted on the common set of resources, and also receive and measure pilot signals transmitted on dedicated sets of resources allocated to the UEs for which the network access device is a member of a monitoring set of network access devices for the UE. One or more of the receiving network access devices, or a CU to which receiving network access device(s) transmit the measurements of the pilot signals, may use the measurements to identify serving cells for the UEs, or to initiate a change of serving cell for one or more of the UEs.

### EXAMPLE BEAMFORMING TRAINING

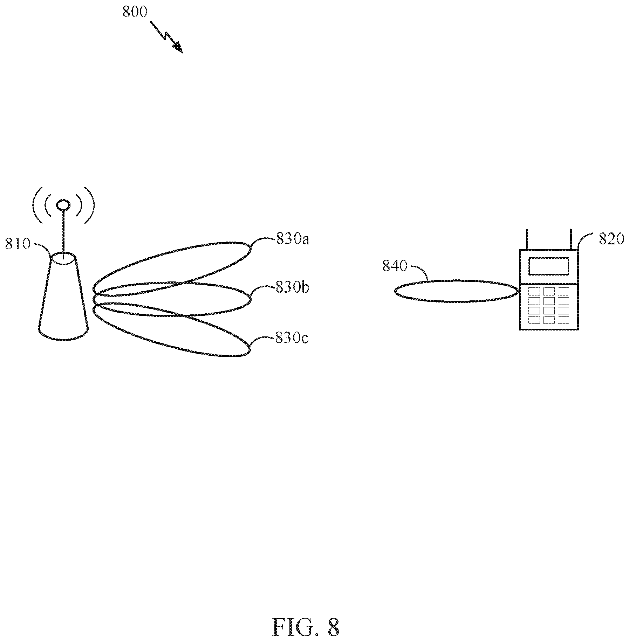

FIG. 8 illustrates an exemplary wireless communications system 800, in accordance with certain aspects of the present disclosure. Wireless communications system 800 includes base station 810 and UE 820. To achieve a high directional gain, beams of the transmitter (e.g. base station 810) and the receiver (e.g. UE 820) may need to be aligned precisely. In some cases, beamforming training (BF) may take place to align beams of AP 810 with beams of UE 820. As an example, in a transmit beamforming phase, AP 810 may sweep through (sending downlink transmissions with) different beams (e.g., 830a, 830b, and 830c), while UE 820 processes the transmissions and sends feedback regarding a preferred one of the transmit beams. Similar operations may be performed in the other direction, with the UE sweeping through different transmit beams 840 (although only one is shown), and the AP sending feedback regarding a preferred beam. Receive beamform training may also be performed, for example, with one side sending repeated transmissions using the preferred transmit beam while the other side sweeps through receive beams. Once the training is complete, so called "optimal" transmit/receive beam pairs may be established for uplink and downlink communications. These beam pairs may be used until a subsequent (e.g., periodic) beamforming training procedure is performed.

### EXAMPLE BEAM SWEEPING FOR CONTROL AND DATA TRANSMISSIONS

As discussed above, after the successful completion of the BF training process, a communication link (e.g. a millimeter wave, sub-6GHz, etc.) may be established using an optimized set of beams, through which data and control information are transmitted between a pair of wireless communication devices. However, due to various factors including mobility, etc., the beams described above may not remain optimal any more over time (i.e. may become sub-optimal). Therefore, in order to keep the beams optimized, in some embodiments, periodic beam retraining may be performed. As an example, due to mobility of the receiver and/or the transmitter, an optimal beam may vary slightly over time. In such an example, in an attempt to maintain optimality, beam retraining may be performed to track the beam variation very closely. Performing such beam retraining, however, may result in a high overhead (e.g. because of control signaling to initiate beam retraining and also the transmission of training sequences).

Accordingly, certain techniques described herein relate to a wireless communication device performing precoder or beam sweeping, cycling through different transmit and/or receive beams in between beamforming training procedures, in order to reduce the sub-optimality of the beams, which may help avoid or reduce the beam re-training overhead described above. In other words, between beamforming training procedures, the wireless communication device may make small variations to its precoder/beam over time to reduce the sub-optimality of the beam. For example, in some embodiments, the direction of an optimal beam may vary slightly over time. In such embodiments, the wireless communication device may vary its beam, resulting in capturing optimality during at least some periods of time.

Cycling through transmit and/or receive beams as described herein, in effect, may provide spatial diversity by constantly varying the spatial path signals take between devices.

In cases where the optimal beam varies relatively often and/or fast, the beam sweeping techniques described above may be especially advantageous. In such embodiments, beam variations may be too hard to track with beam retraining, therefore, causing too much overhead. Also, as described above, sticking with the beam optimized by beam-training may be suboptimal for longer time periods. As noted above, the techniques of varying the beam, in some embodiments, may offer a form of spatial diversity.

FIG. 9 illustrates example operations 900 for wireless communications by a wireless device, according to aspects of the present disclosure. The wireless device performing operation 900 may be, for example, a UE. Operations 900 begin, at 902, by determining a sequence of transmit beams for use in sending directional transmissions to a base station. At 904, operations 900 continue by sweeping through the sequence of transmit beams for uplink (UL) transmissions to the base station between beamforming training procedures performed with the base station.

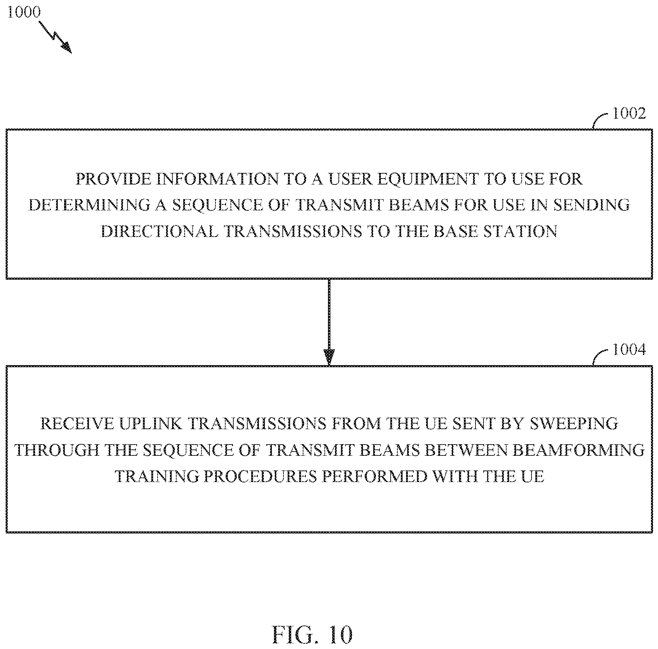

FIG. 10 illustrates example operations 1000 for wireless communications by a wireless device, according to aspects of the present disclosure. The wireless device performing operation 1000 may be, for example, a base station that configures a UE to operate in accordance with operations 9000. Operations 1000 begin, at 1002, by providing information to a user equipment to use for determining a sequence of transmit beams for use in sending directional transmissions to the base station. At 1004, operations 1000 continue by receiving uplink transmissions from the UE sent by sweeping through the sequence of transmit beams between beamforming training procedures performed with the UE.

In some embodiments, the techniques described above may be used in precoder/beam sweeping by a UE for scheduled uplink data and control transmissions (e.g., SRS transmissions). In such embodiments, a UE may determine a sequence of transmit beams to be used for UL transmissions (i.e., directional transmissions). In some embodiments, the number of beams included in the sequence of beams configured may depend on how wide the beam sweep is.

In some embodiments, the determination of the sequence of transmit beams may be based on the most recent or prior downlink or uplink beam training results (e.g., using an optimal beam as a reference beam to deviate around). For example, in some embodiments, the selection of the sequence of transmit beams may be based on a downlink transmission of a measurement reference signal (MRS) (e.g., synchronization signals (SS), channel state information reference signal (CSI-RS)), assuming reciprocity. In some other embodiments, the selection may be based on an uplink transmission of an MRS (e.g. SRS) (applicable regardless of whether reciprocity holds).

After a sequence of transmit beams have been selected, in some embodiments, the UE may sweep through the sequence of transmit beams for uplink transmissions to the based station (e.g., rather than waiting for beamforming training procedures to be performed with the base station again). In some embodiments, the UE may select transmit beams, from the sequence of beams swept by the UE, based on a transmission time interval (TTI) (e.g. slot, subframe, etc.) index of a corresponding uplink transmission. For example, uplink transmissions in an odd slot-index may use a beam different than a beam used by transmissions in an even slot-index. In some embodiments the UE may select transmit beams, from the sequence of beams, based on a transmission counter. In such embodiments, from the time when the sequence of transmit beams have been configured, the UE may keep a counter. Subsequently, the first time the UE transmits on the UL it may use the first beam in the sequence of beams and the next time it may use the next beam in the sequence of beams. In such embodiments, the UE may keep track of what beam was used in the last transmission in order to use the next beam in the sequence of transmit beams for the next transmission. Accordingly, in some embodiments, after every transmission the UE may increment the counter, for example, by 1.

The approach of using a transmission counter may, in some embodiments, be made even more flexible. For example, in some embodiments, separate hybrid automatic repeat request (HARQ) processes may use separate beam sequences and transmission counters, or the same beam sequence with separate transmission counters, or the same beam sequence and same transmission counter. Similarly, in some embodiments, the control transmissions and the data transmissions may use separate beam sequences and transmission counters, or the same beam sequence with separate transmission counters, or the same beam sequence and same transmission counter. In some embodiments, the transmission counter may be incremented for HARQ retransmissions of data, or for repetitions of control or data transmissions. In some embodiments, the transmission counter may be left unchanged for HARQ retransmissions of data, or for repetitions of control or data transmissions.

In some embodiments, utilizing a transmission counter, however, may be error prone. For example, in some embodiments, the gNB may not be in sync with the UE's transmission counter, resulting in a need for error-recovery. An example of the gNB and UE not being in sync with respect to the transmission counter may occur if the UE missed the UL downlink control information (DCI) sent on the downlink (DL) and gNB is unable to determine whether or not the UE transmitted anything.

In addition to using the techniques described above in precoder/beam sweeping for scheduled uplink data and control transmissions, the same techniques may be used for unscheduled uplink control and data transmissions. In unscheduled uplink transmissions, in some embodiments, a UE may autonomously transmit data or control channel without the gNB being aware of the transmission in advance. In such embodiments, data or control may be transmitted in certain time/frequency resources, with beam association to DL (e.g. to DL synchronization beams). For example, when there is no PUSCH/PUCCH assigned, the UE may transmit a scheduling request (SR) to inform the gNB that the UE needs to be scheduled for uplink data transmission. Similarly, UE may transmit a beam failure recovery request (BFRQ) to inform the gNB that the beams currently used for communication have failed due to low signal strength, and to request a new beam direction.

Since beam training is not performed in unscheduled uplink data and control transmissions, in some embodiments, to increase the likelihood that the beam directions are aligned, one or more beam associations may be defined between the UE's unscheduled data transmission (e.g. SR transmission) and the downlink synchronization beams. In some embodiments, however, the transmit beam based on the defined beam association may not always be optimal. This may be caused due to various factors including minor deviations from perfect reciprocity or the time delay between unscheduled UL resource and beam-associated DL resource.

Accordingly, in some embodiments, beam sweeping around the defined beam-association may reduce the sub-optimality described above. In such embodiments, the sweeping directions may be specified based on the defined beam association with downlink resources. For example, in some embodiments, in the slot reserved for unscheduled UL transmissions, orthogonal frequency division multiplexing (OFDM) symbol *n* (ofdmsymb#n) may be beam-paired with OFDM symbol *n* (ofdmsymb#n) of a recent DL synchronization slot. Furthermore, in some embodiments, UE's transmission of OFDM symbol *n* (ofdmsymb#n) may cycle over time between the beams corresponding to OFDM symbols *n-1, n, and n*+*1* (ofdmsymb# n-1, n, and n+1). In some embodiments, the allowed beam sequence may be pre-configured, as described above, and in some embodiments it may be based on the slot index or a transmission counter, as described previously.

In some embodiments, the UE may autonomously perform a selection of UL beam sweeping. In such embodiments, because the UE autonomously decides to change the transmit beam direction without the gNB being aware, the selected beams may need to be close enough such that they may be received with the same receive beam. As described above, this is because in some embodiments the gNB may not be aware of the transmit beam and hence may not be able to correspondingly optimize its receive beam. In some embodiments, the UE may autonomously select the close beams, as described above. In some embodiments, the UE may perform this determination by applying changes (e.g., small changes) in phase-shifts across the antenna elements. In some embodiments, the UE may measure the response metrics to such changes (e.g., small changes) (e.g., HARQ Ack/Nack) and make the determination based on the response metrics.

In some embodiments, the gNB may assist the UE's transmit beam sweeping by providing information (i.e., signaling) to the UE. In some embodiments, the signaling indicates the entire sequence of transmit beams (i.e., all the transmit beams in the sequence) that the UE may subsequently determine based on the signaling and sweep. In some other embodiments, the gNB may send a number of separate and successive signalings, each providing an indication of a successive beam or a group of transmit beams in the sequence of transmit beams. In some embodiments, the gNB may determine the sequence of transmit beams for the UE based on the most recent beam training results.

In some embodiments, the information gNB provides to the UE for assistance may include a maximum phase-shift change allowed relative to phase-shifts used in optimized beam. In such embodiments, the optimized beam may be the one based on beam-training for scheduled UL transmissions. For unscheduled UL transmissions, the optimized beam may be the one based on beam-association.

In some embodiments, the information gNB provides to the UE for assistance may include a low-overhead indication of received beam quality across the beam-sweeping. In such embodiments, this feedback mechanism may be enabled only in a mode when beam-sweeping is configured. In some embodiments, this feedback mechanism may be more reliable than the UE relying on HARQ Ack/Nack as a metric.

In some embodiments, a gNB's receive beam may be constant such that the same receive beam may be used for all the different transmit beams. However, in some embodiments, the base station may sweep through a sequence of receive beams for receiving the uplink transmissions. In such embodiments, instead of using the same receive beam for all the different transmit beams, the receive beam may be optimized for each of the transmit beams in the sequence of beams. In other words, in such embodiments, each receive beam in the sequence of receive beams may be associated with a transmit beam in the sequence of transmit beams. In some embodiments, if the receive beam is optimized for each of the transmit beams, it may be necessary for gNB to be aware of which beam in the sequence of beams the UE is using for the transmission.

In addition to the beam sweeping techniques described above for uplink data and control transmissions, certain embodiments described herein relate to beam sweeping for downlink control and data transmissions.

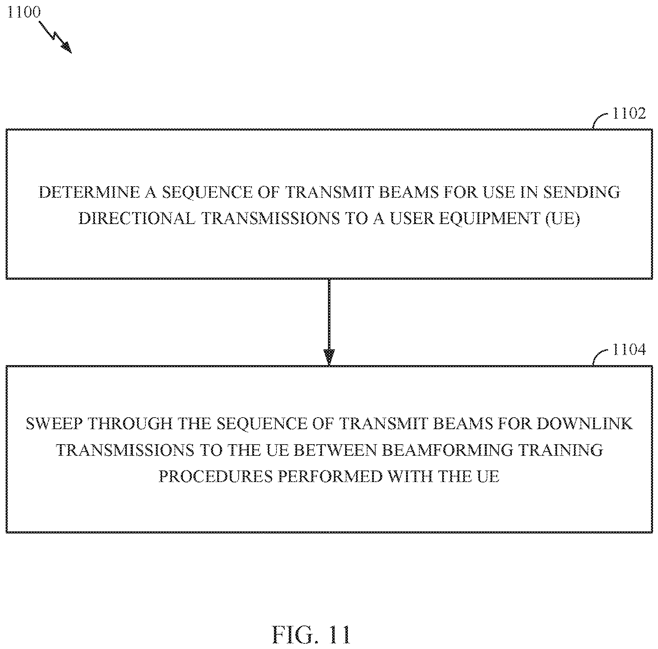

For example, FIG. 11 illustrates example operations 1100 for a base statin sending downlink transmissions while sweeping transmit beams, in accordance with certain aspects of the present disclosure. Operations 1100 begin, at 1102, by determining a sequence of transmit beams for use in sending directional transmissions to a user equipment (UE). At 1104, operations 1100 continue by sweeping through the sequence of transmit beams for downlink transmissions to the UE between beamforming training procedures performed with the UE.

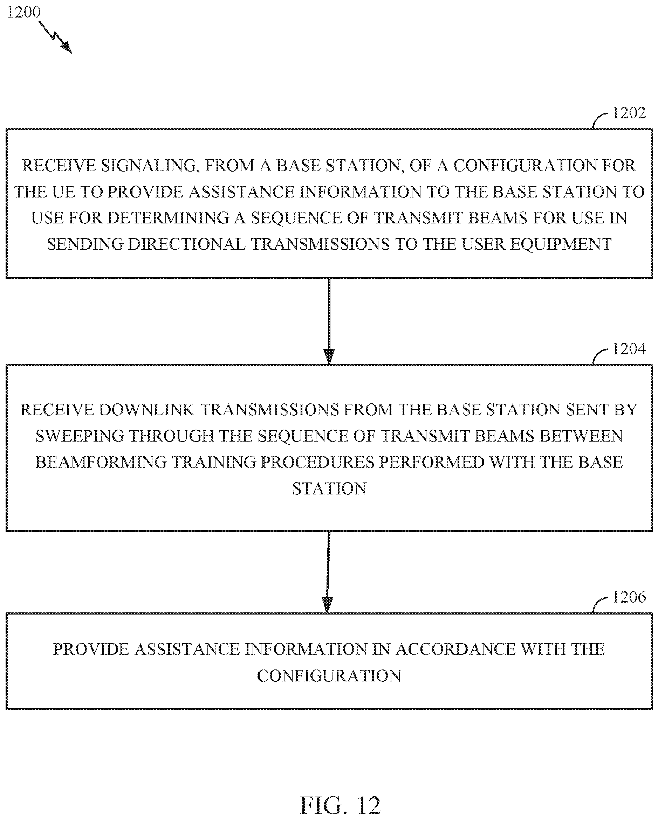

FIG. 12 illustrates example operations 1200 for a UE communicating with a base station that is sending downlink transmissions while sweeping transmit beams, in accordance with certain aspects of the present disclosure. Operations 1200 may be performed by a UE communicating with a base station performing operations 1100. Operations 1200 begin, at 1202, by receiving signaling, from a base station, of a configuration for the UE to provide assistance information to the base station to use for determining a sequence of transmit beams for use in sending directional transmissions to the user equipment. At 1204, operations 1200 continue by receiving downlink transmissions from the base station sent by sweeping through the sequence of transmit beams between beamforming training procedures performed with the base station. At 1206, operations 1200 continue by providing assistance information in accordance with the configuration.

In some embodiments, all the techniques or aspects described in relation to the UE's beam sweeping for uplink transmissions may also be used by a gNB for downlink transmissions. Accordingly, as described above, in some embodiments, selecting the transmit beams, from the sequence of transmit beams, may be based on a prior beamforming training procedure and in some embodiments the selection may be based on a transmission time interval (TTI) index of a corresponding downlink transmission. However, identifying such beams based on a transmission counter may, in some embodiments, be less reliable due to the possibility of a missed assignment on the DL control channel (e.g. missed PDCCH). In some embodiments, the gNB may configure a QCL (quasi-co-location) relation indicating that only certain beams in the sweep may be used for time/frequency tracking loops. In such embodiments, the beams may be identified based on a TTI index (e.g. slot/subframe index). In addition, as described above, in some embodiments, the gNB may autonomously perform beam sweeping similar to the UE's autonomous beam sweeping.

In some embodiments, the gNB may send more details of the sweep pattern to the UE in order to allow the UE to optimize the receive beam specific to each of the swept beams. For example, the gNB may specify the number of beams and the periodicity or pattern of the sweep. As was the case under the UL transmissions, details regarding the sweep pattern may be different for control (e.g. PDCCH) as opposed to data (e.g. PDSCH) transmissions.

Similar to the gNB assisting the UE's beam sweeping in UL transmission, the UE may assist the gNB in its DL beam sweeping by, for instance, sending information to the gNB relating to the receive beam quality of the transmit beams. For example, the gNB may configure the UE to assist in optimizing the sweep by providing low-overhead feedback of the receive quality across the sweep. In addition, in some embodiments, the UE may sweep through its sequence of receive beams for receiving the downlink transmissions. Subsequently, the receive beam may be optimized for each of the transmit beams in the sequence of beams.

In addition to the beam sweeping techniques described above relating to transmit beams, certain embodiments described herein relate to receive beam sweeping.

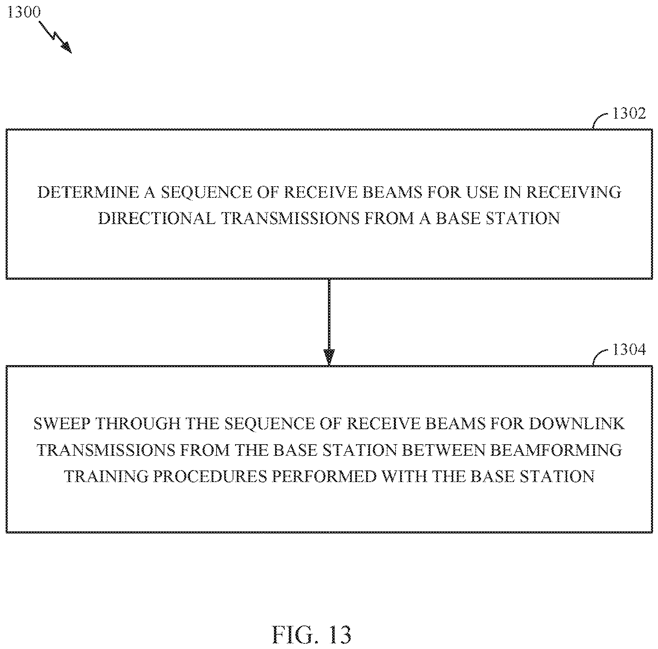

For example, FIG. 13 illustrates example operations 1300 for receiving downlink transmissions by a UE while sweeping receive beams, in accordance with certain aspects of the present disclosure. Operations 1300 begin, at 1302, by determining a sequence of receive beams for use in receiving directional transmissions from a base station. At 1304, operations 1300 continue by sweeping through the sequence of receive beams for downlink transmissions from the base station between beamforming training procedures performed with the base station.

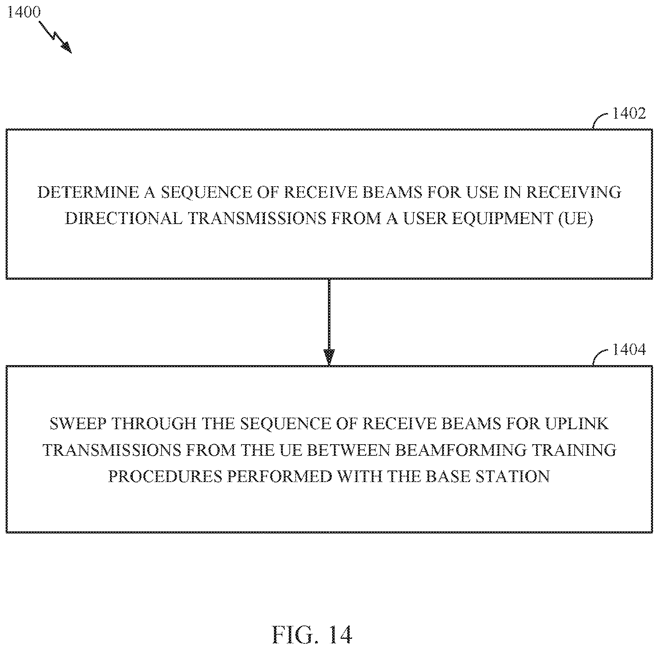

Similarly, FIG. 14 illustrates example operations 1400 for receiving uplink transmissions by a base station while sweeping receive beams, in accordance with certain aspects of the present disclosure Operations 1400 begin, at 1402, by determining a sequence of receive beams for use in receiving directional transmissions from a user equipment (UE). At 1404, the BS sweeps through the sequence of receive beams for uplink transmissions from the UE between beamforming training procedures performed with the base station.

The various techniques described above in relation to transmit beam sweeping performed by a UE may also be performed for receive beam sweeping. For instance, the techniques described above in relation to transmit beams include transmit beam sweeping by a UE, with a corresponding receive beam at a gNB either being fixed during the transmit sweep or optimized separately for each beam in the transmit sweep. Similar to the transmit beam sweep, in some embodiments, a UE may perform a receive beam sweep such that the receive beam itself may be optimized autonomously by the receiver, using beam sweeping. In some other embodiments, the receive beam at the UE may be slaved to a transmit beam at the UE, assuming reciprocity. In some embodiments, the system may cycle through any combination of all the alternatives describe above, over time, through reconfiguration or periodic cycling.

The methods disclosed herein comprise one or more steps or actions for achieving the described method. The method steps and/or actions may be interchanged with one another without departing from the scope of the claims. In other words, unless a specific order of steps or actions is specified, the order and/or use of specific steps and/or actions may be modified without departing from the scope of the claims.

As used herein, a phrase referring to "at least one of' a list of items refers to any combination of those items, including single members. As an example, "at least one of: a, b, or c" is intended to cover a, b, c, a-b, a-c, b-c, and a-b-c, as well as any combination with multiples of the same element (e.g., a-a, a-a-a, a-a-b, a-a-c, a-b-b, a-c-c, b-b, b-b-b, b-b-c, c-c, and c-c-c or any other ordering of a, b, and c).

As used herein, the term "determining" encompasses a wide variety of actions. For example, "determining" may include calculating, computing, processing, deriving, investigating, looking up (e.g., looking up in a table, a database or another data structure), ascertaining and the like. Also, "determining" may include receiving (e.g., receiving information), accessing (e.g., accessing data in a memory) and the like. Also, "determining" may include resolving, selecting, choosing, establishing and the like.

The previous description is provided to enable any person skilled in the art to practice the various aspects described herein. Various modifications to these aspects will be readily apparent to those skilled in the art, and the generic principles defined herein may be applied to other aspects. Thus, the claims are not intended to be limited to the aspects shown herein, but is to be accorded the full scope consistent with the language claims, wherein reference to an element in the singular is not intended to mean "one and only one" unless specifically so stated, but rather "one or more." Unless specifically stated otherwise, the term "some" refers to one or more. Moreover, nothing disclosed herein is intended to be dedicated to the public regardless of whether such disclosure is explicitly recited in the claims.

The various operations of methods described above may be performed by any suitable means capable of performing the corresponding functions. The means may include various hardware and/or software component(s) and/or module(s), including, but not limited to a circuit, an application specific integrated circuit (ASIC), or processor. Generally, where there are operations illustrated in figures, those operations may have corresponding counterpart means-plus-function components with similar numbering.

For example, means for transmitting and/or means for receiving may comprise one or more of a transmit processor 420, a TX MIMO processor 430, a receive processor 438, or antenna(s) 434 of the base station 110 and/or the transmit processor 464, a TX MIMO processor 466, a receive processor 458, or antenna(s) 452 of the user equipment 120. Additionally, means for generating, means for multiplexing, and/or means for applying may comprise one or more processors, such as the controller/processor 440 of the base station 110 and/or the controller/processor 480 of the user equipment 120.

The various illustrative logical blocks, modules and circuits described in connection with the present disclosure may be implemented or performed with a general purpose processor, a digital signal processor (DSP), an application specific integrated circuit (ASIC), a field programmable gate array (FPGA) or other programmable logic device (PLD), discrete gate or transistor logic, discrete hardware components, or any combination thereof designed to perform the functions described herein. A general-purpose processor may be a microprocessor, but in the alternative, the processor may be any commercially available processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

If implemented in hardware, an example hardware configuration may comprise a processing system in a wireless node. The processing system may be implemented with a bus architecture. The bus may include any number of interconnecting buses and bridges depending on the specific application of the processing system and the overall design constraints. The bus may link together various circuits including a processor, machine-readable media, and a bus interface. The bus interface may be used to connect a network adapter, among other things, to the processing system via the bus. The network adapter may be used to implement the signal processing functions of the PHY layer. In the case of a user terminal 120 (see FIG. 1), a user interface (e.g., keypad, display, mouse, joystick, etc.) may also be connected to the bus. The bus may also link various other circuits such as timing sources, peripherals, voltage regulators, power management circuits, and the like, which are well known in the art, and therefore, will not be described any further. The processor may be implemented with one or more general-purpose and/or special-purpose processors. Examples include microprocessors, microcontrollers, DSP processors, and other circuitry that can execute software. Those skilled in the art will recognize how best to implement the described functionality for the processing system depending on the particular application and the overall design constraints imposed on the overall system.

If implemented in software, the functions may be stored or transmitted over as one or more instructions or code on a computer readable medium. Software shall be construed broadly to mean instructions, data, or any combination thereof, whether referred to as software, firmware, middleware, microcode, hardware description language, or otherwise. Computer-readable media include both computer storage media and communication media including any medium that facilitates transfer of a computer program from one place to another. The processor may be responsible for managing the bus and general processing, including the execution of software modules stored on the machine-readable storage media. A computer-readable storage medium may be coupled to a processor such that the processor can read information from, and write information to, the storage medium. In the alternative, the storage medium may be integral to the processor. By way of example, the machine-readable media may include a transmission line, a carrier wave modulated by data, and/or a computer readable storage medium with instructions stored thereon separate from the wireless node, all of which may be accessed by the processor through the bus interface. Alternatively, or in addition, the machine-readable media, or any portion thereof, may be integrated into the processor, such as the case may be with cache and/or general register files. Examples of machine-readable storage media may include, by way of example, RAM (Random Access Memory), flash memory, ROM (Read Only Memory), PROM (Programmable Read-Only Memory), EPROM (Erasable Programmable Read-Only Memory), EEPROM (Electrically Erasable Programmable Read-Only Memory), registers, magnetic disks, optical disks, hard drives, or any other suitable storage medium, or any combination thereof. The machine-readable media may be embodied in a computer-program product.

A software module may comprise a single instruction, or many instructions, and may be distributed over several different code segments, among different programs, and across multiple storage media. The computer-readable media may comprise a number of software modules. The software modules include instructions that, when executed by an apparatus such as a processor, cause the processing system to perform various functions. The software modules may include a transmission module and a receiving module. Each software module may reside in a single storage device or be distributed across multiple storage devices. By way of example, a software module may be loaded into RAM from a hard drive when a triggering event occurs. During execution of the software module, the processor may load some of the instructions into cache to increase access speed. One or more cache lines may then be loaded into a general register file for execution by the processor. When referring to the functionality of a software module below, it will be understood that such functionality is implemented by the processor when executing instructions from that software module.

Also, any connection is properly termed a computer-readable medium. For example, if the software is transmitted from a website, server, or other remote source using a coaxial cable, fiber optic cable, twisted pair, digital subscriber line (DSL), or wireless technologies such as infrared (IR), radio, and microwave, then the coaxial cable, fiber optic cable, twisted pair, DSL, or wireless technologies such as infrared, radio, and microwave are included in the definition of medium. Disk and disc, as used herein, include compact disc (CD), laser disc, optical disc, digital versatile disc (DVD), floppy disk, and Blu-ray® disc where disks usually reproduce data magnetically, while discs reproduce data optically with lasers. Thus, in some aspects computer-readable media may comprise non-transitory computer-readable media (e.g., tangible media). In addition, for other aspects computer-readable media may comprise transitory computer-readable media (e.g., a signal). Combinations of the above should also be included within the scope of computer-readable media.

Thus, certain aspects may comprise a computer program product for performing the operations presented herein. For example, such a computer program product may comprise a computer-readable medium having instructions stored (and/or encoded) thereon, the instructions being executable by one or more processors to perform the operations described herein.

Further, it should be appreciated that modules and/or other appropriate means for performing the methods and techniques described herein can be downloaded and/or otherwise obtained by a user terminal and/or base station as applicable. For example, such a device can be coupled to a server to facilitate the transfer of means for performing the methods described herein. Alternatively, various methods described herein can be provided via storage means (e.g., RAM, ROM, a physical storage medium such as a compact disc (CD) or floppy disk, etc.), such that a user terminal and/or base station can obtain the various methods upon coupling or providing the storage means to the device. Moreover, any other suitable technique for providing the methods and techniques described herein to a device can be utilized.

It is to be understood that the claims are not limited to the precise configuration and components illustrated above. Various modifications, changes and variations may be made in the arrangement, operation and details of the methods and apparatus described above without departing from the scope of the claims.

## Claims

1. A method for wireless communications by a first wireless communications device, the method comprising:
determining (902, 1102) a sequence of transmit beams for use in sending directional transmissions to a second wireless communications device; and
sweeping (904, 1104) through the sequence of transmit beams for transmissions to the second wireless communications device between beamforming training procedures performed with the second wireless communications device, **characterized by**:
the sweeping comprises selecting transmit beams, from the sequence, based on a counter, wherein separate counters are used for selecting the transmit beams for data and control transmissions.

2. The method of claim 1, wherein the sequence of transmit beams is determined based on results of a prior beamforming training procedure.

3. The method of claim 1, wherein the first wireless communications device is a user equipment, UE, and the second wireless communications device is a base station.

4. The method of claim 3, wherein at least some of the transmissions are unscheduled.

5. The method of claim 3, wherein the first wireless communications device determines the sequence of transmit beams based on assistance information provided by the second wireless communications device.

6. The method of claim 3, further comprising:
receiving signaling, from the second wireless communications device, indicating the sequence of transmit beams.

7. The method of claim 6, wherein receiving the signaling further comprises receiving separate signalings each indicating a successive beam or group of beams in the sequence of transmit beams.

8. The method of claim 1, wherein the first wireless communications device autonomously determines the sequence of transmit beams by applying changes in phase-shifts across antenna elements of the first wireless communications device such that every application of a change in phase-shift results in a new beam in the sequence of transmit beams.

9. The method of claim 1, wherein the first wireless communications device autonomously determines the sequence of transmit beams based on response metrics for the transmissions.

10. A first wireless communications device comprising:
means for determining a sequence of transmit beams for use in sending directional transmissions to a second wireless communications device; and
means for sweeping through the sequence of transmit beams for transmissions to the second wireless communications device between beamforming training procedures performed with the second wireless communications device, **characterized by**:
the means for sweeping comprises means for selecting transmit beams, from the sequence, based on a counter, wherein separate counters are used for selecting the transmit beams for data and control transmissions.

11. A method for wireless communications by a first wireless communications device, the method comprising:
determining (1302, 1402) a sequence of receive beams for use in receiving directional transmissions from a second wireless communications device; and
sweeping (1304, 1404) through the sequence of receive beams for transmissions from the second wireless communications device between beamforming training procedures performed with the second wireless communications device, **characterized by**:
the sweeping comprises selecting receive beams, from the sequence, based on a counter, wherein separate counters are used for selecting receive beams for data and control transmissions.

12. The method of claim 11, wherein the sequence of receive beams is determined based on results of a prior beamforming training procedure.

13. The method of claim 11, wherein the first wireless communications device autonomously determines the sequence of receive beams by applying small changes in phase-shifts across antenna elements of the first wireless communications device such that every application of a small change in phase-shift results in a new beam in the sequence of receive beams.

14. The method of claim 11, wherein the first wireless communications device autonomously determines the sequence of receive beams based on response metrics for the transmissions.

15. A first wireless communications device comprising:
means for determining a sequence of receive beams for use in receiving directional transmissions from a second wireless communications device; and
means for sweeping through the sequence of receive beams for transmissions from the second wireless communications device between beamforming training procedures performed with the second wireless communications device, **characterized by**:
the means for sweeping comprises means for selecting receive beams, from the sequence, based on a counter, wherein separate counters are used for selecting receive beams for data and control transmissions.

## Patentansprüche

1. Ein Verfahren für drahtlose Kommunikationen durch ein erstes drahtloses Kommunikationsgerät, wobei das Verfahren aufweist:
Bestimmen (902, 1102) einer Sequenz von Sendestrahlen für die Verwendung beim Senden von direktionalen Sendungen an ein zweites drahtloses Kommunikationsgerät, und
Durchlaufen (904, 1104) der Sequenz von Sendestrahlen für Sendungen an das zweite drahtlose Kommunikationsgerät zwischen mit dem zweiten drahtlosen Kommunikationsgerät durchgeführten Strahlformungs-Trainingsprozeduren,
**dadurch gekennzeichnet, dass**:
das Durchlaufen das Auswählen von Sendestrahlen aus der Sequenz basierend auf einem Zähler aufweist, wobei separate Zähler für das Auswählen der Sendestrahlen für Daten und Steuersendungen verwendet werden.

2. Verfahren nach Anspruch 1, wobei die Sequenz von Sendestrahlen basierend auf Ergebnissen einer vorausgehenden Strahlformungs-Trainingsprozedur bestimmt wird.

3. Verfahren nach Anspruch 1, wobei das erste drahtlose Kommunikationsgerät ein Benutzergerät (User Equipment bzw. UE) ist und das zweite drahtlose Kommunikationsgerät eine Basisstation ist.

4. Verfahren nach Anspruch 3, wobei wenigstens einige der Sendungen nicht-geplant sind.

5. Verfahren nach Anspruch 3, wobei das erste drahtlose Kommunikationsgerät die Sequenz von Sendestrahlen basierend auf durch das zweite drahtlose Kommunikationsgerät vorgesehenen Hilfsinformationen bestimmt.

6. Verfahren nach Anspruch 3, das weiterhin aufweist:
Empfangen einer Signalisierung, die die Sequenz von Sendestrahlen angibt, von dem zweiten drahtlosen Kommunikationsgerät.

7. Verfahren nach Anspruch 6, wobei das Empfangen der Signalisierung weiterhin das Empfangen von separaten Signalisierungen, die jeweils einen folgenden Strahl oder eine folgende Gruppe von Strahlen in der Sequenz von Sendestrahlen angeben, aufweist.

8. Verfahren nach Anspruch 1, wobei das erste drahtlose Kommunikationsgerät autonom die Sequenz von Sendestrahlen durch das Anwenden von Änderungen in Phasenverschiebungen über Antennenelemente des ersten drahtlosen Kommunikationsgeräts derart bestimmt, dass jede Anwendung einer Änderung in der Phasenverschiebung in einem neuen Strahl in der Sequenz von Sendestrahlen resultiert.

9. Verfahren nach Anspruch 1, wobei das erste drahtlose Kommunikationsgerät autonom die Sequenz von Sendestrahlen basierend auf Antwortmetriken für die Sendungen bestimmt.

10. Ein erstes drahtloses Kommunikationsgerät, aufweisend:
Mittel zum Bestimmen einer Sequenz von Sendestrahlen für die Verwendung beim Senden von direktionalen Sendungen an ein zweites drahtloses Kommunikationsgerät, und
Mittel zum Durchlaufen der Sequenz von Sendestrahlen für Sendungen an das zweite drahtlose Kommunikationsgerät zwischen mit dem zweiten drahtlosen Kommunikationsgerät durchgeführten Strahlformungs-Trainingsprozeduren,
**dadurch gekennzeichnet, dass**:
die Mittel zum Durchlaufen Mittel zum Auswählen von Sendestrahlen aus der Sequenz basierend auf einem Zähler aufweisen, wobei separate Zähler für das Auswählen der Sendestrahlen für Daten- und Steuersendungen verwendet werden.

11. Ein Verfahren für drahtlose Kommunikationen durch ein erstes drahtloses Kommunikationsgerät, wobei das Verfahren aufweist:
Bestimmen (1302, 1402) einer Sequenz von Empfangsstrahlen für die Verwendung beim Empfangen von direktionalen Sendungen von einem zweiten drahtlosen Kommunikationsgerät, und
Durchlaufen (1304, 1404) der Sequenz von Empfangsstrahlen für Sendungen von dem zweiten drahtlosen Kommunikationsgerät zwischen mit dem zweiten drahtlosen Kommunikationsgerät durchgeführten Strahlformungs-Trainingsprozeduren,
**dadurch gekennzeichnet, dass**:
das Durchlaufen das Auswählen von Empfangsstrahlen aus der Sequenz basierend auf einem Zähler aufweist, wobei separate Zähler für das Auswählen von Empfangsstrahlen für Daten und Steuersendungen verwendet werden.

12. Verfahren nach Anspruch 11, wobei die Sequenz von Empfangsstrahlen basierend auf Ergebnissen einer vorausgehenden Strahlungsformungs-Trainingsprozedur bestimmt wird.

13. Verfahren nach Anspruch 11, wobei das erste drahtlose Kommunikationsgerät autonom die Sequenz von Empfangsstrahlen durch das Anwenden von kleinen Änderungen in Phasenverschiebungen über Antennenelemente des ersten drahtlosen Kommunikationsgeräts derart bestimmt, dass jede Anwendung einer kleinen Änderung in der Phasenverschiebung in einem neuen Strahl in der Sequenz von Empfangsstrahlen resultiert.

14. Verfahren nach Anspruch 11, wobei das erste drahtlose Kommunikationsgerät autonom die Sequenz von Empfangsstrahlen basierend auf Antwortmetriken für die Sendungen bestimmt.

15. Ein erstes drahtloses Kommunikationsgerät, aufweisend:
Mittel zum Bestimmen einer Sequenz von Empfangsstrahlen für die Verwendung beim Empfangen von direktionalen Sendungen von einem zweiten drahtlosen Kommunikationsgerät, und
Mittel zum Durchlaufen der Sequenz von Empfangsstrahlen für Sendungen von dem zweiten drahtlosen Kommunikationsgerät zwischen mit dem zweiten drahtlosen Kommunikationsgerät durchgeführten Strahlformungs-Trainingsprozeduren,
**dadurch gekennzeichnet, dass**:
die Mittel zum Durchlaufen Mittel zum Auswählen von Empfangsstrahlen aus der Sequenz basierend auf einem Zähler aufweisen, wobei separate Zähler für das Auswählen von Empfangsstrahlen für Daten und Steuersendungen verwendet werden.

## Revendications

1. Procédé de communication sans fil par un premier dispositif de communication sans fil, le procédé comprenant les étapes consistant à :
déterminer (902, 1102) une séquence de faisceaux de transmission destinés à être utilisés pour l'envoi de transmissions directionnelles à un second dispositif de communication sans fil ; et
balayer (904, 1104) la séquence de faisceaux de transmission concernant des transmissions au second dispositif de communication sans fil entre des procédures d'apprentissage de formation de faisceaux réalisées avec le second dispositif de communication sans fil,
le procédé étant **caractérisé en ce que** :
le balayage comprend l'étape consistant à sélectionner des faisceaux de transmission, dans la séquence, sur la base d'un compteur, des compteurs distincts étant utilisés pour sélectionner les faisceaux de transmission pour des transmissions de données et de contrôle.

2. Procédé selon la revendication 1, dans lequel la séquence de faisceaux de transmission est déterminée sur la base de résultats d'une procédure d'apprentissage de formation de faisceaux antérieure.

3. Procédé selon la revendication 1, dans lequel le premier dispositif de communication sans fil est un équipement d'utilisateur, UE, et le second dispositif de communication sans fil est une station de base.

4. Procédé selon la revendication 3, dans lequel au moins certaines des transmissions ne sont pas planifiées.

5. Procédé selon la revendication 3, dans lequel le premier dispositif de communication sans fil détermine la séquence de faisceaux de transmission sur la base d'une information d'assistance fournie par le second dispositif de communication sans fil.

6. Procédé selon la revendication 3, comprenant en outre l'étape consistant à :
recevoir, en provenance du second dispositif de communication sans fil, une signalisation indiquant la séquence de faisceaux de transmission.

7. Procédé selon la revendication 6, dans lequel la réception de la signalisation comprend en outre l'étape consistant à recevoir des signalisations distinctes indiquant chacune un faisceau successif ou un groupe successif de faisceaux dans la séquence de faisceaux de transmission.

8. Procédé selon la revendication 1, dans lequel le premier dispositif de communication sans fil détermine de façon autonome la séquence de faisceaux de transmission en appliquant des variations de décalages de phase sur des éléments d'antenne du premier dispositif de communication sans fil, de sorte que chaque application d'une variation d'un décalage de phase donne lieu à un nouveau faisceau dans la séquence de faisceaux de transmission.

9. Procédé selon la revendication 1, dans lequel le premier dispositif de communication sans fil détermine de façon autonome la séquence de faisceaux de transmission sur la base d'indicateurs métriques de réponse pour les transmissions.

10. Premier dispositif de communication sans fil, comprenant :
un moyen permettant de déterminer une séquence de faisceaux de transmission destinés à être utilisés pour l'envoi de transmissions directionnelles à un second dispositif de communication sans fil ; et
un moyen permettant de balayer la séquence de faisceaux de transmission concernant des transmissions au second dispositif de communication sans fil entre des procédures d'apprentissage de formation de faisceaux réalisées avec le second dispositif de communication sans fil,
le premier dispositif étant **caractérisé en ce que** :
le moyen permettant de balayer comprend un moyen permettant de sélectionner des faisceaux de transmission, dans la séquence, sur la base d'un compteur, des compteurs distincts étant utilisés pour sélectionner les faisceaux de transmission pour des transmissions de données et de contrôle.

11. Procédé de communication sans fil par un premier dispositif de communication sans fil, le procédé comprenant les étapes consistant à :
déterminer (1302, 1402) une séquence de faisceaux de réception destinés à être utilisés pour la réception de transmissions directionnelles en provenance d'un second dispositif de communication sans fil ; et
balayer (1304, 1404) la séquence de faisceaux de réception concernant des transmissions en provenance du second dispositif de communication sans fil entre des procédures d'apprentissage de formation de faisceaux réalisées avec le second dispositif de communication sans fil,
le procédé étant **caractérisé en ce que** :
le balayage comprend l'étape consistant à sélectionner des faisceaux de réception, dans la séquence, sur la base d'un compteur, des compteurs distincts étant utilisés pour sélectionner des faisceaux de réception pour des transmissions de données et de contrôle.

12. Procédé selon la revendication 11, dans lequel la séquence de faisceaux de réception est déterminée sur la base de résultats d'une procédure d'apprentissage de formation de faisceaux antérieure.

13. Procédé selon la revendication 11, dans lequel le premier dispositif de communication sans fil détermine de façon autonome la séquence de faisceaux de réception en appliquant de légères variations de décalages de phase sur des éléments d'antenne du premier dispositif de communication sans fil, de sorte que chaque application d'une légère variation d'un décalage de phase donne lieu à un nouveau faisceau dans la séquence de faisceaux de réception.

14. Procédé selon la revendication 11, dans lequel le premier dispositif de communication sans fil détermine de façon autonome la séquence de faisceaux de réception sur la base d'indicateurs métriques de réponse pour les transmissions.

15. Premier dispositif de communication sans fil, comprenant :
un moyen permettant de déterminer une séquence de faisceaux de réception destinés à être utilisés pour la réception de transmissions directionnelles en provenance d'un second dispositif de communication sans fil ; et
un moyen permettant de balayer la séquence de faisceaux de réception concernant des transmissions en provenance du second dispositif de communication sans fil entre des procédures d'apprentissage de formation de faisceaux réalisées avec le second dispositif de communication sans fil,
le premier dispositif étant **caractérisé en ce que** :
le moyen permettant de balayer comprend un moyen permettant de sélectionner des faisceaux de réception, dans la séquence, sur la base d'un compteur, des compteurs distincts étant utilisés pour sélectionner des faisceaux de réception pour des transmissions de données et de contrôle.
